# EUROPÄISCHE PATENTSCHRIFT

(11) **EP 1 540 233 B1**
(45) Veröffentlichungstag und Bekanntmachung des Hinweises auf die Patenterteilung: **11.03.2009**
(21) Anmeldenummer: 03769282.9
(22) Anmeldetag: 17.09.2003
(51) Int. Cl.: F16L 37/252

(54) **SYMMETRISCHE SCHLAUCHKUPPLUNG**
SYMMETRICAL HOSE COUPLING
RACCORD SYMETRIQUE POUR TUYAUX

(30) Priorität: 18.09.2002 DE 20214463 U
(43) Veröffentlichungstag der Anmeldung: 15.06.2005
(73) Patentinhaber: Max Widenmann KG Armaturenfabrik, 89537 Giengen/Brenz (DE)
(72) Erfinder: AMBROSI, Johann, 89542 Herbrechtingen (DE)
(74) Vertreter: Prinz & Partner
(86) Internationale Anmeldenummer: PCT/EP2003/010331
(87) Internationale Veröffentlichungsnummer: WO 2004/029498

(56) Entgegenhaltungen:
- EP-A- 0 770 809
- WO-A-03/074922
- DE-C- 380 786
- DE-U- 1 738 434
- US-A- 3 201 151

## Beschreibung

Die Erfindung betrifft eine symmetrische Schlauchkupplung deren Kupplungshälften einen Anbindestutzen und einen Knaggenring aufweisen.

Symmetrische Schlauchkupplungen dieser Bauform sind als Storz-Kupplungen bekannt und insbesondere im Brandbekämpfungswesen weit verbreitet. Bei diesen Kupplungen ist der Knaggenring drehbar auf dem Anbindestutzen angeordnet. Die am Umfang des Knaggenrings angeordneten Knaggen sind in radialer Erstreckungsrichtung hakenförmig und greifen beim Kuppeln durch eine stirnseitige Öffnung in den jeweils anderen Knaggenring, um dann durch Drehung der Knaggenringe relativ zueinander hinter eine in Umfangsrichtung verlaufende Leiste zu greifen, die in Axialrichtung ansteigt. Die axialkraftübertragenden Flächen erstrecken sich an beiden Kupplungshälften in Umfangsrichtung. Von Vorteil ist bei diesen Kupplungen, daß nur die Knaggenringe gedreht werden, während die Anbindestutzen und die darauf angebrachten Schläuche beim Kuppeln nicht gedreht werden. Die Knaggenringe haben aber einen wesentlich größeren Außendurchmesser als Anbindestutzen mit Schlauch. Für großvolumige Schläuche im Bereich von mehreren hundert Millimeter Durchmesser ergibt sich ein kaum noch akzeptabler Außendurchmesser der Knaggenringe. Nachteilig ist auch, daß durch den relativ großen erforderlichen Kuppelweg die kraftübertragenden Teile in ihren Querschnitten und somit in ihrer Tragfähigkeit begrenzt sind, wodurch ihre Auslegung für große Kraftübertragungen, wie sie bei höheren Innendrücken, Ziehen oder Biegung der Schlauchleitung oder in Kombination solcher Einflüsse erforderlich werden, nur durch unverhältnismäßige Vergrößerung des Kupplungsdurchmessers oder Verwendung von Werkstoffen mit höheren Festigkeiten realisiert werden kann, was wiederum zu Problemen bei der Handhabung und bei der Fertigung führt.

EP 0 770 809 A1 offenbart eine symmetrische Schlauchkupplung mit symmetrischen Kupplungshälften nach dem Oberbegriff des Anspruchs 1. Jede Kupplungshälfte weist einen Schlauchanbindestutzen auf, der mit einem Knaggenring verschraubt ist. Der Knaggenring weist Knaggen auf, die in tangentialer Richtung hakenförmig ausgebildet sind. Drängvorrichtungen stellen sicher, daß sich die Kupplungshälften nach dem Aneinanderführen gegenseitig verdrehen. Die Knaggen sind in axialer Richtung abstehend an der Stirnfläche des Knaggenrings ausgebildet.

Durch die Erfindung wird eine Schlauchkupplung geschaffen, die in der Lage ist, große Kräfte zu übertragen, ohne daß der größte Kupplungsdurchmesser im Verhältnis zum Schlauchdurchmesser übermäßig vergrößert werden muß und ohne daß hohe Anforderungen an Werkstoffestigkeit und Fertigungstechnik gestellt werden müssen. Gemäß der Erfindung ist der Anbindestutzen einteilig mit dem Knaggenring ausgebildet, wobei die Knaggen am Umfang des Knaggenrings angeordnet sind und radial vom Knaggenring abstehen. Die Knaggen sind in tangentialer Richtung hakenförmig ausgebildet und sind mit radialen axialkraftübertragenden Flächen ausgestattet. Die Knaggen der Kupplungshälften greifen beim Kuppeln ineinander, wobei die axialkraftübertragenden Flächen einander bajonettartig hintergreifen. Bei der erfindungsgemäßen Schlauchkupplung sind die axialkraftübertragenden Flächen an den Knaggen ausgebildet. Die am Umfang des Knaggenrings angeordneten Knaggen bestimmen den größten Außendurchmesser der Kupplung. Dieser ist nur um das radiale Maß der Knaggen größer als der Außendurchmesser des Anbindestutzens. Beim Kuppeln müssen zwar die Anbindestutzen mit den Knaggenringen relativ zueinander verdreht werden, jedoch nur um einen relativ kleinen Drehwinkel, der in etwa dem Abstand zweier benachbarter Knaggen in Umfangsrichtung entspricht. Die Kupplungshälften können gießtechnisch aus einem herkömmlichen Material wie Aluminium gefertigt werden.

Bei der bevorzugten Ausführungsform der Schlauchkupplung sind die axialkraftübertragenden Flächen der Knaggen zur Tangentialrichtung und auf die Relativdrehung beim Kuppeln bezogen mit Neigung ausgebildet. Beim Kuppeln entsteht daher ein Rasteffekt, der einer Rückdrehung der Kupplungshälften entgegenwirkt. Auf einen axialen Anstieg der beim Kuppeln aufeinandergleitenden radialen Flächen an den Knaggen kann verzichtet werden, wenn die Kupplungshälften mit Formdichtringen ausgestattet sind, die eine Dichtung durch hydraulischen Innendruck auch ohne axiale Anpreßkraft gewährleisten.. Demgemäß hat bei der bevorzugten Ausführungsform der Knaggenring bzw. Anbindestutzen in seiner der jeweils anderen Kupplungshälfte zugewandten Stirnfläche und radial innerhalb der Knaggen einen ringförmigen Einstich zur Aufnahme eines Formdichtringes. Die Dichtlippe des Formdichtringes steht im ungekuppelten Zustand axial über die Stirnfläche des Knaggenrings hinaus und ist nach innen gerichtet. Beim Kuppeln kommen zuerst die Dichtlippen der beiden Kupplungshälften in Anlage aneinander. Die Kupplungshälften werden dann axial gegeneinander gedrückt, so daß die Knaggen ineinandergreifen können. Die Dichtwirkung wird in bekannter Weise durch den hydraulischen Druck erzielt, der die Dichtringe gegeneinander und gegen die den Einstich begrenzenden Dichtflächen preßt.

Zur Sicherung der Schlauchkupplung im gekuppelten Zustand werden Blockiereinrichtungen zwischen wenigstens zwei benachbarte Knaggen eingebracht. Alternativ finden in Umfangsrichtung wirkende Haltemittel Anwendung, die zwei benachbarte Knaggen zusammenhalten.

Weitere Merkmale und Vorteile der Erfindung ergeben sich aus der folgenden Beschreibung unter Bezugnahme auf die beigefügten Zeichnungen. In den Zeichnungen zeigen:
- Figur 1 einen diametralen Schnitt einer Kupplungshälfte;

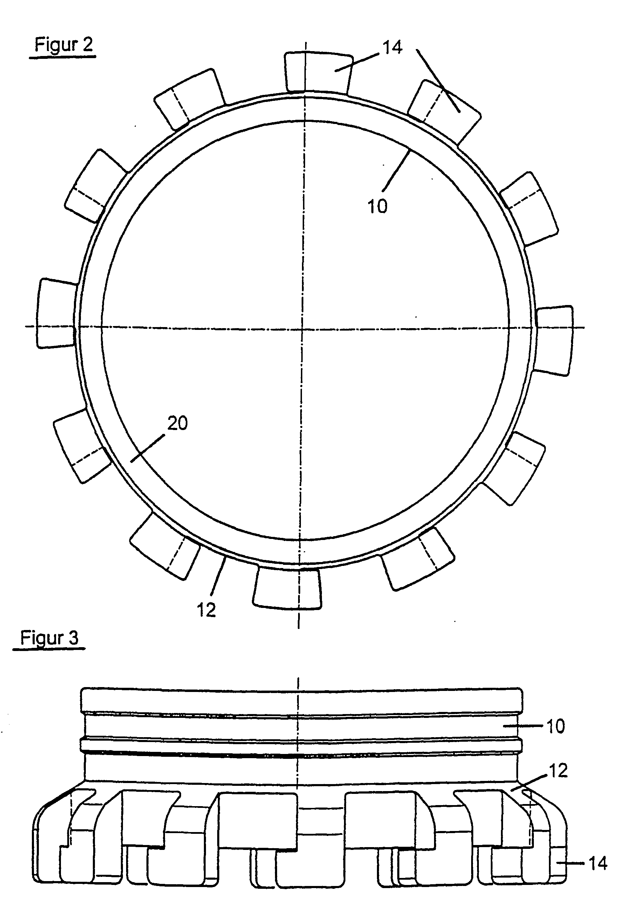

- Figur 2 eine Kupplungshälfte in Frontansicht;
- Figur 3 eine Kupplungshälfte in Seitenansicht;
- Figur 4 eine Abwicklung der gekuppelten Knaggen mit einer ersten Ausführungsform eines Sicherungsmechanismus;
- Figur 5 eine Abwicklung der gekuppelten Knaggen mit einem Sicherungsmechanismus gemäß einer zweiten Ausführungsform; und
- Figur 6 eine Abwicklung der gekuppelten Knaggen mit einem Sicherungsmechanismus nach einer dritten Ausführungsform.

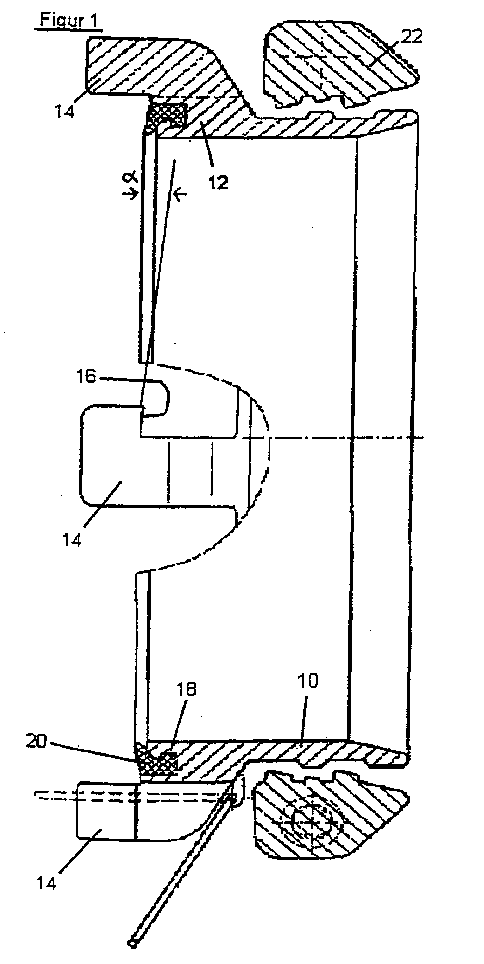

Die symmetrische Schlauchkupplung besteht aus zwei identischen Kupplungshälften, von denen in Figur 1 eine dargestellt ist. Jede Kupplungshälfte besteht aus einem zylindrischen Anbindestutzen 10 und einem einteilig mit diesem ausgebildeten Knaggenring 12, an dessen Umfang radial abstehende Knaggen 14 angeordnet sind. Die Knaggen 14 sind in tangentialer Erstreckungsrichtung hakenförmig. Bei der gezeigten Ausführungsform sind auf dem Umfang des Knaggenrings 12 insgesamt zwölf Knaggen 14 in gleichen Winkelabständen angeordnet. Die zwischen den Knaggen verbleibenden Lücken sind etwas breiter als die Breite der Knaggen in Umfangsrichtung, so daß die Knaggen beider Kupplungshälften zum Kuppeln ineinandergreifen können. Die axialkraftübertragenden Flächen 16 sind an den Knaggen 14 ausgebildet und haben eine radiale Erstreckung. Gleichzeitig sind die axialkraflübertragenden Flächen 16 gegen die Tangentialrichtung um wenige Grad geneigt, wie in Figur 1 durch einen Winkel α angedeutet.

Die der jeweils anderen Kupplungshälfte zugewandte Stirnfläche des Knaggenrings 12 ist radial innerhalb der Knaggen 14 mit einem ringförmigen Einstich 18 versehen, der einen Formdichtring 20 aufnimmt. Der Formdichtring 20 hat eine nach innen weisende Dichtlippe, die im ungekuppelten Zustand axial über die Stirnfläche des Knaggenrings 12 hinaussteht. Auf dem Anbindestutzen 10 kann ein (nicht dargestellter) Schlauch mittels eines aus Segmenten zusammengesetzten Ringes 22 befestigt werden. Die Segmente dieses Ringes 22 werden durch tangentiale Schraubkräfte radial form- und reibschlüssig gegen den mit umlaufenden Nuten gestalteten Anbindestutzen 10 gepreßt. Alternativ zu der gezeigten Ausführungsform des Anbindestutzens 10 sind Ausführungen mit Gewindeanschluß (Festkupplung) oder Verschlußdeckel (Bindkupplung) vorgesehen.

Die gezeigte Ausführungsform mit zwölf Knaggen ist für einen Schlauchinnendurchmesser von 305 mm dimensioniert und hat einen größten Außendurchmesser von 372 mm. Je nach Durchmesser und Druckbelastung kann die Anzahl der Knaggen größer oder kleiner sein.

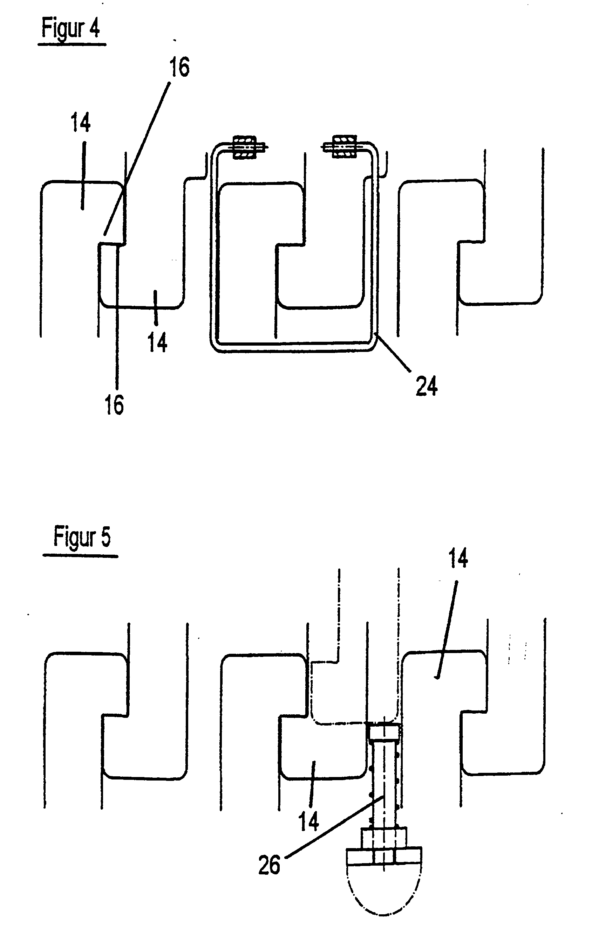

Im gekuppelten Zustand, wie in den Figuren 4 und 5 veranschaulicht, greifen die Knaggen der beiden Kupplungshälften bajonettartig ineinander, wobei die axialkraftübertragenden Flächen 16 aufeinanderliegen. Durch die Neigung dieser Flächen 16 wird ein Rasteffekt erzielt, der einer Rückdrehung der Kupplungshälften entgegenwirkt. Eine zusätzliche Sicherung wird in Figur 4 mit einem Drahtbügel 24 erzielt, der zwei benachbarte Knaggen in Umfangsrichtung zusammenhält. Bei der in Figur 5 gezeigten Ausführungsform ist ein Sicherungsmechanismus vorgesehen, der einen federbelasteten Bolzen 26 aufweist. Der federbelastete Bolzen 26 greift in die Lücke zwischen zwei in Umfangsrichtung benachbarten Knaggen 14 und blockiert diese so automatisch gegen eine unbeabsichtigte Rückdrehung.

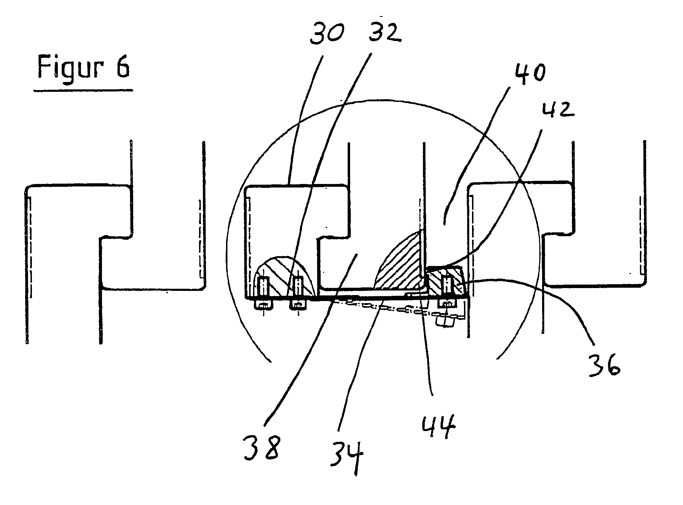

Bei der in Fig. 6 gezeigten Ausführungsform des Sicherungsmechanismus ist auf einer zum Knaggenkopf 30 parallelen Fläche 32 eine Blattfeder 34 befestigt. Am freien Ende der Blattfeder 34 ist ein Distanzelement 36 befestigt. Beim Einkuppeln wird das Distanzelement 36 zunächst von der Gegenknagge 38 weggedrückt, wobei die Blattfeder 34 ausgelenkt wird. Im vollständig gekuppelten Zustand federt das Distanzelement 36 in die Lücke 40 zwischen den Knaggen zurück. Das Distanzelement 36 trägt an seiner der Gegenknagge 38 zugewandten Fläche und am von der Blattfeder 34 abgewandten Ende einen Ansatz 42, der bei Kraftangriff einen hakenartigen Vorsprung 44 am kopfseitigen Ende der Gegenknagge 38 hintergreift, um ein Herausheben des Distanzelements 36 aus der Lücke 40 zu verhindern.

## Patentansprüche

1. Symmetrische Schlauchkupplung, deren Kupplungshälften einen zylindrischen Schlauchanbindestutzen (10) und einen Knaggenring (12) aufweisen, wobei die Knaggen (14) in tangentialer Richtung hakenförmig ausgebildet sind und radiale axialkraftübertragende Flächen (16) aufweisen und wobei die Knaggen der Kupplungshälften beim Kuppeln so ineinandergreifen, daß die axialkraftübertragenden Flächen (16) einander bajonettartig hintergreifen, **dadurch gekennzeichnet, daß** der Schlauchanbindestutzen (10) einteilig mit dem Knaggenring (12) ausgebildet ist und daß die Knaggen (14) am Umfang des Knaggenrings (12) angeordnet sind und radial vom Knaggenring abstehen.

2. Schlauchkupplung nach Anspruch 1, **dadurch gekennzeichnet, dass** die axialkraftübertragenden Flächen (16) der Knaggen (14) zur Tangentialrichtung und auf die Relativdrehung beim Kuppeln bezogen mit Neigung ausgebildet sind.

3. Schlauchkupplung nach Anspruch 1 oder 2, **dadurch gekennzeichnet, dass** der Knaggenring (12) in seiner der jeweils anderen Kupplungshälfte zugewandten Stirnfläche und radial innerhalb der Knaggen einen ringförmigen Einstich (18) zur Aufnahme eines Formdichtrings (20) aufweist, dessen Dichtlippe im ungekuppelten Zustand axial über die Stirnfläche des Knaggenrings (12) hinaussteht.

4. Schlauchkupplung nach einem der vorstehenden Ansprüche, **dadurch gekennzeichnet, dass** die Knaggen (14) in Umfangsrichtung des Knaggenrings (12) Abstände voneinander haben, die nur wenig größer sind als die Breite der Knaggen (14) in Umfangsrichtung.

5. Schlauchkupplung nach einem der vorstehenden Ansprüche, **dadurch gekennzeichnet, dass** im gekuppelten Zustand die Kupplungshälften gegen Relativdrehung durch zwischen wenigstens zwei benachbarte Knaggen (14) eingefügte Blockiermittel (26; 36) gesichert sind.

6. Schlauchkupplung nach Anspruch 5, **dadurch gekennzeichnet, dass** die Blockiermittel (36) durch ein Distanzelement gebildet sind, das an einem freien Ende einer Blattfeder (34) befestigt ist und in eine Umfangslücke zwischen zwei benachbarten Knaggen (14) zweier vollständig gekuppelter Knaggenringe (12) eingreift.

7. Schlauchkupplung nach einem der vorstehenden Ansprüche, **dadurch gekennzeichnet, dass** im gekuppelten Zustand die Kupplungshälften gegen Relativdrehung durch wenigstens zwei benachbarte Knaggen (14) in Umfangsrichtung zusammenhaltende Haltemittel (24) gesichert sind.

## Claims

1. A symmetrical hose coupling having coupling halves that include a cylindrical hose fixing connection (10) and a cam ring (12), the cams (14) being made hook-shaped in the tangential direction and having radial surfaces (16) transmitting axial forces, and the cams of the coupling halves engaging into each other during coupling such that the surfaces (16) transmitting axial forces engage behind each other in a bayonet-type fit, **characterized in that** the hose fixing connection (10) is designed in one piece with the cam ring (12) and that the cams (14) are arranged on the periphery of the cam ring (12) and project radially from the cam ring.

2. The hose coupling as claimed in claim 1, **characterized in that** the surfaces (16), transmitting axial forces, of the cams (14) are configured to be inclined in relation to the tangential direction and as related to the relative rotation during coupling.

3. The hose coupling as claimed in claim 1 or 2, **characterized in that** the cam ring (12), in its end face facing the respective other coupling half and radially inwardly of the cams, has an annular undercut (18) for receiving a shaped sealing ring (20) having a sealing lip which in the uncoupled condition protrudes axially beyond the end face of the cam ring (12).

4. The hose coupling as claimed in any of the preceding claims, **characterized in that** in the peripheral direction of the cam ring (12), the cams (14) are arranged at distances from each other which are only slightly greater than the width of the cams (14) in the peripheral direction.

5. The hose coupling as claimed in any of the preceding claims, **characterized in that** in the coupled condition, the coupling halves are locked against relative rotation by blocking means (26; 36) inserted between at least two adjacent cams (14).

6. The hose coupling as claimed in claim 5, **characterized in that** the blocking means (36) are formed by a spacer element which is secured to a free end of a leaf spring (34) and engages into a circumferential gap between two adjacent cams (14) of two fully coupled cam rings (12).

7. The hose coupling as claimed in any of the preceding claims, **characterized in that** in the coupled condition, the coupling halves are locked against relative rotation by retaining means (24) that hold at least two adjacent cams (14) together in the peripheral direction.

## Revendications

1. Raccord symétrique pour tuyaux, dont les moitiés de raccord présentent une tubulure d'attachement de tuyau (10) cylindrique et un anneau à taquets (12), les taquets (14) étant réalisés en forme de crochet en direction tangentielle et présentant des surfaces (16) radiales de transmission de force axiale et les taquets des moitiés de raccord s'engrenant lors du raccordement de telle sorte que les surfaces de transmission de force axiale (16) s'engagent mutuellement par l'arrière à la manière d'un montage à baïonnette, **caractérisé en ce que** tubulure d'attachement de tuyau (10) est réalisée d'une seule pièce avec l'anneau à taquets (12) et **en ce que** les taquets (14) sont agencés à la périphérie de l'anneau à taquets (12) et font saillie radialement depuis l'anneau à taquets.

2. Raccord pour tuyaux selon la revendication 1, **caractérisé en ce que** les surfaces de transmission de force axiale (16) des taquets (14) sont réalisées avec inclinaison par rapport à la direction tangentielle et à la rotation relative lors de l'accouplement.

3. Raccord pour tuyaux selon la revendication 1 ou 2, **caractérisé en ce que** l'anneau à taquets (12) présente dans sa face frontale tournée vers l'autre moitié de raccord respective et radialement à l'intérieur des taquets une encoche (18) destinée à recevoir un joint d'étanchéité façonné(20) dont la lèvre d'étanchéité, à l'état non raccordé, fait saillie axialement au-delà de la face frontale de l'anneau à taquets (12).

4. Raccord pour tuyaux selon l'une des revendications précédentes, **caractérisé en ce que** les taquets (14) ont en direction périphérique de l'anneau à taquets (12) des distances les uns par rapport aux autres qui ne sont que légèrement plus grandes que la largeur des taquets (14) en direction périphérique.

5. Raccord pour tuyaux selon l'une des revendications précédentes, **caractérisé en ce qu'**à l'état raccordé, les moitiés de raccord sont mises en sécurité vis-à-vis d'une rotation relative par des moyens de blocage (26 ; 36) insérés entre au moins deux taquets (14) voisins.

6. Raccord pour tuyaux selon la revendication 5, **caractérisé en ce que** les moyens de blocage (36) sont formés par un élément d'espacement qui est fixé à une extrémité libre d'un ressort à lame (34) et qui s'engage dans un interstice périphérique entre deux taquets (14) voisins de deux anneaux à taquets (12) entièrement raccordés.

7. Raccord pour tuyaux selon l'une des revendications précédentes, **caractérisé en ce qu'**à l'état raccordé, les moitiés de raccord sont mises en sécurité vis-à-vis d'une rotation relative par des moyens de maintien (24) maintenant ensemble au moins deux taquets (14) voisins en direction périphérique.
